# FASCICULE DE BREVET EUROPEEN

(11) **EP 0 338 883 B1**
(45) Date of publication and mention of the grant of the patent: **27.10.1993**
(21) Application number: 89400924.0
(22) Date of filing: 04.04.1989
(51) Int. Cl.: A01C 7/04

(54) **Distributor apparatus for spacing drill**
Verteilervorrichtung an einer Einzelkornsämaschine
Distributeur pour semoir monograine

(30) Priority: 22.04.1988 FR 19880005398
(43) Date of publication of application: 08.12.1993
(60) Divisional application: 92117272.2
(73) Proprietor: ATELIERS RIBOULEAU, F-79240 Largeasse (FR)
(72) Inventor: Ribouleau, Michel, F-75015 - Paris (FR)
(74) Representative: de Morgues, Marie Emma

(56) References cited:
- DE-2 217 513
- DE-1 931 362
- DE-2 517 758
- US-3 999 690

## Description

Les semoirs monograines sont de plus en plus appréciés des cultivateurs du fait de la régularité et de la précision qu'ils permettent.

La demande de brevet allemand 2 517 758 décrit un semoir muni d'un distributeur comportant un carter de forme générale cylindrique à l'intérieur duquel est monté rotatif, sur un axe horizontal, un disque distributeur qui est muni d'orifices espacés circonférentiellement et qui sépare un réceptacle à graines d'un dispositif d'aspiration muni d'un élément de réglage de l'aspiration de telle sorte que les orifices sont soumis à une dépression de retenue des graines prélevées dans le réceptacle pendant au moins une partie de leur déplacement angulaire; des moyens d'élimination des graines doubles constitués par un organe déflecteur et, à la partie inférieure du carter, une ouverture de décharge des graines, le dispositif d'aspiration comportant, à l'intérieur du carter, un canal de dépression ayant sensiblement la forme d'un croissant dont les extrémités sont prolongées en direction l'une de l'autre, le long de la périphérie du carter, par deux branches étroites. Chacune de ces graines est ainsi séparée rigoureusement des autres et déposée seule dans le sillon à ensemencer.

Certains distributeurs, tel que celui décrit dans les FR-A-2 135 702 et 2 174 341, comportent un disque muni d'ailettes qui facilitent l'alimentation des orifices en graines, ainsi que la conduite et le lacher précis de ces graines, ce qui permet une sélection automatique très simple des graines tout en n'exigeant qu'une dépression faible. Toutefois, le disque ne pouvant comporter qu'un nombre limité d'ailettes, c'est-à-dire d'alvéoles contenant chacun une graine, seul un accroissement de la vitesse de rotation du disque permet d'augmenter la densité du semis, ce qui interdit les semis de forte densité.

D'autres distributeurs (FR-A-1 585 445) comportent un disque dépourvu d'ailettes qui peut, par suite, être percé d'un grand nombre d'orifices et qui de ce fait s'adapte bien au forte densité de semis. Malheureusement, ces distributeurs exigent une dépression importante sans quoi les graines ne sont pas entraînées, de sorte qu'ils sont peu adaptés aux graines lourdes et de gros calibres.

Le cultivateur qui, généralement, doit effectuer plusieurs types de semis se trouve donc confronté à un choix difficile ou dans l'obligation de disposer de plusieurs semoirs.

La présente invention a pour but de remédier à cet inconvénient en fournissant un distributeur pour semoir monograine qui s'adapte facilement à tous les types de semis.

Cette invention a en effet pour objet un distributeur du type ci-dessus dans lequel le dispositif d'aspiration comporte au départ de l'une de ses branches une cavité de logement d'un organe d'obturaton susceptible d'isoler cette branche de la source de dépression et un organe d'obturation logé dans ladite cavité.

Selon une autre caractéristique de l'invention, le fond du canal de dépression est muni d'une prise d'air dont l'ouverture est réglable et constitue l'élément de réglage de l'aspiration.

La description ci-dessous de modes de réalisation, donnés à titre d'exemple non limitatif et représentés aux dessins annexés, fera d'ailleurs ressortir les avantages et caractéristiques de l'invention. Sur ces dessins :
La figure 1 est une vue en perspective éclatée d'un distributeur pour semoir monograine selon l'invention, muni d'un disque à ailettes.
La figure 2 montre le distributeur de la Fig.1 une fois assemblé, en coupe suivant la ligne 2-2 de la Fig.3.
La figure 3 est une vue en coupe suivant la ligne 3-3 de la Fig.2.
La figure 4 est une vue en coupe suivant la ligne 4-4 de la Fig.2.
LA figure 5 est une vue partielle, analogue à la Fig.2, montrant une variante de réalisation des moyens d'élimination des graines doubles.
La figure 6 est une vue analogue à la Fig.2 du distributeur muni d'un disque simple.

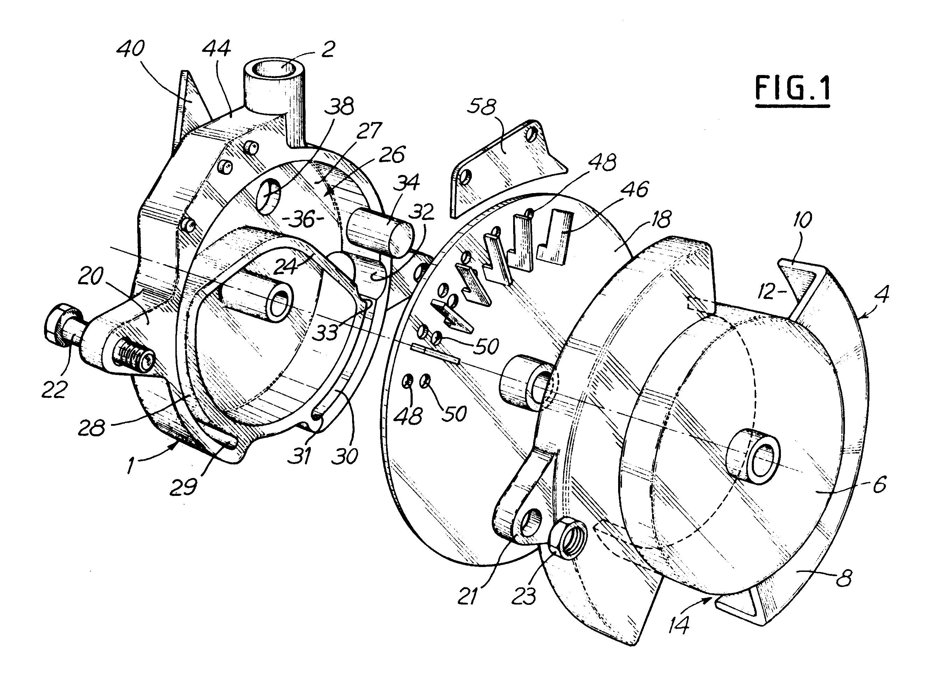

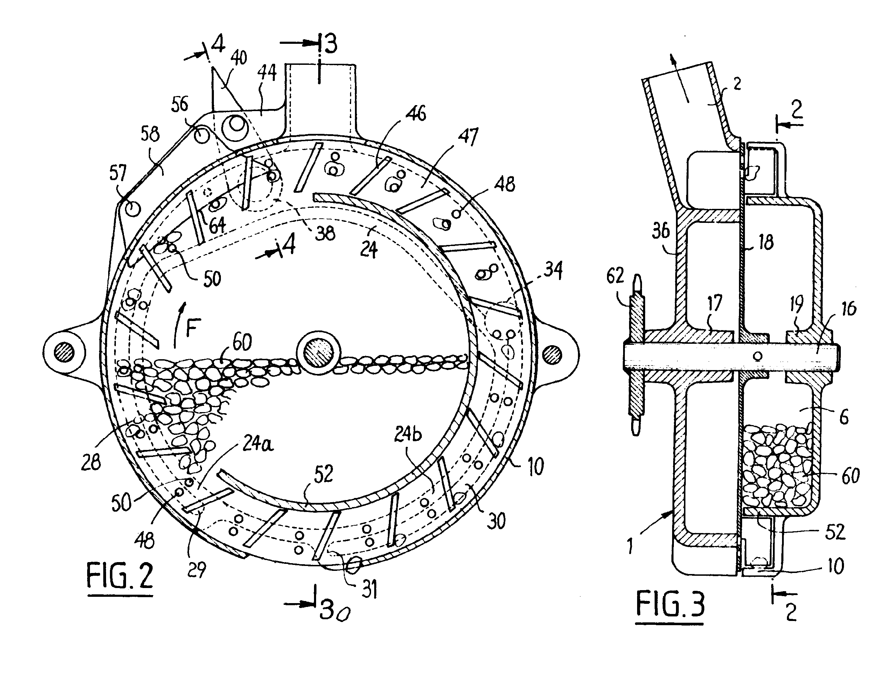

Un distributeur pour semoir monograine comporte, comme le montre plus paticulièrement 13 Fig.1, un carter de forme générale cylindrique qui est constitué par un boîtier 1 muni à sa partie supérieure d'un cheminée 2 de liaison à un organe d'aspiration, ou à une autre source de dépression appropriée, et par un couvercle 4 qui forme un réceptacle de graines 6 entouré par une collerette 8 munie à sa périphérie d'un rebord 10 dirigé vers le boîtier 1. La collerette 8 est interrompue à sa partie supérieure, en 12, pour assurer la communication de son volume interne avec l'atmosphère extérieure et à sa partie inférieure, en 14, pour constituer une ouverture de décharge des graines. Le boîtier 1 et le couvercle 4 sont montés sur un même axe 16 par l'intermédiaire de portées cylindriques, respectivement 17 et 19, qui permettent à cet arbre de tourner par rapport à eux (Fig.3).

L'axe 16 est rendu solidaire d'un disque distributeur 18 qui est en contact étanche avec la paroi du boîtier 1 et contre lequel le couvercle 4 est maintenu par tout moyen approprié. Par exemple, dans le mode de réalisation représenté, le boîtier 1 et le couvercle 4 comportent chacun deux pattes latérales respectivement 20 et 21 qui sont traversées par deux vis 22 et serrées les unes contre les autres au moyen d'écrous 23.

A l'intérieur du boîtier 1, une cloison 24 délimite avec la paroi de ce boîtier un canal de dépression 26 en communication avec la cheminée d'aspiration 2. La cloison 24 ayant à sa partie supérieure sensiblement la forme d'un V à l'envers, le canal de dépression 26 comporte au voisinage de la cheminée d'aspiration 2 une partie supérieure large, 27, sensiblement en forme de croissant. Chacune des extrémités de ce croissant est prolongée par une branche étroite périphérique, respectivement 28 et 30, ces deux branches se dirigeant l'une vers l'autre mais ne se rejoignant pas. En effet les extrémités des branches 28 et 30 sont fermées à la partie inférieure du boîtier 1 au droit de l'ouverture de décharge des graines du couvercle 4. Leurs extrémités 29, 31 sont, dans le mode de réalisation représenté, légèrement décalées par rapport à cette ouverture 14 de telle sorte que l'extrémité 29 de la branche 28 est plus élevée que l'extrémité 31 de la branche 30. En fait l'extrémité 30 de la branche descendante en considérant le sens de rotation du disque distributeur 18, indiqué par la flêche F sur la Fig.2, est normalement au point le plus bas du distributeur.

A la partie supérieure de la branche 30, c'est-à-dire de la branche descendante, la paroi du boîtier 1 ainsi que la face en regard de la cloison 24 comportent chacune un évidement incurvé, respectivement 32 et 33, qui délimitent ensemble une cavité de logement d'un organe d'obturation, constitué dans le mode de réalisation représenté par un bouchon cylindrique 34 mais pouvant être formé par une trappe, une glissière ou tout autre organe approprié. Ce bouchon 34 a une longueur axiale égale à la profondeur du boîtier 1 de sorte que lorsqu'il est en place dans la cavité 32,33 il obture totalement l'entrée de la branche 30 du canal de dépression et isole celle-ci de la cheminée d'aspiration 2. Le bouchon 34 est toutefois amovible et peut facilement être retiré lorsque la branche 30 doit être soumise à une dépression.

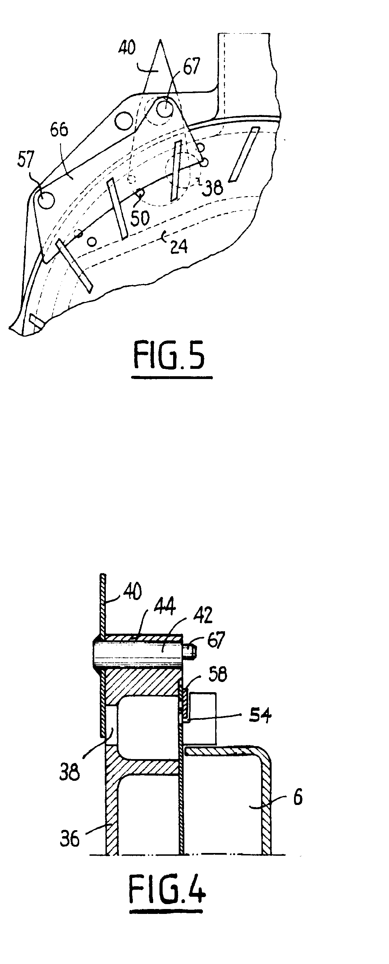

Le fond 36 du boîtier 1 est, par ailleurs, muni, au voisinage de la cheminée d'aspiration 2, d'une prise d'air 38 qui est associée avec une manette 40 pivotant derrière le fond 36 sur un axe 42 qui traverse un bossage extérieur 44 de la paroi du carter 1 (Fig.4).

Dans le mode de réalisation représenté sur les Fig.1 à 4, le disque distributeur 18 est muni d'une série d'ailettes 46 toute en sailie en direction du couvercle 4 et régulièrement espacées sur la circonférence et comporte deux rangées circonférentielles de trous 48, 50, un trou de chacune des rangées étant contenu dans l'alvéole 47 délimité par les deux ailettes 46 voisines. Le diamètre des orifices 48,50 de même que leur position radiale sont telles que les trous 48 de la rangée radialement extérieure se trouvent en regard de la branche étroite 28 ou 30 du canal de dépression tandis que les trous 50 de la rangée interne se placent en regard de la portion cylindrique 24a, 24b de la cloison 24 qui délimite ces branches étroites 28 et 30. A la partie supérieure du carter les deux rangées de trous 48,50 débouchent dans la partie large 27 du canal de dépression, comme le montre plus particulièrement la Fig.2.

Sur la face du disque opposée au canal de dépression, les alvéoles 47 délimitées par les ailettes 46 adjacentes sont fermées radialement à l'extérieur par le bord 10 de la collerette 8 et à l'intérieur par un prolongement cylindrique 52 de la paroi du réceptacle à graines qui s'étend en regard de la partie descendante du canal de dépression sur un peu plus de la moitié d'une circonférence c'est-à-dire jusqu'à un point situé au-delà de l'ou-verture 14 de décharge des graines.

De l'autre côté du distributeur, c'est-à-dire au voisinage de la partie ascendante du canal de dépression, les alvéoles sont en communication avec le réceptacle 6. En outre, le bossage 44 porte, par l'intermédiaire de deux axes 56 et 57, un organe déflecteur 58 sur lequel glisse la face du disque distributeur 18 opposée au canal de dépression. L'organe 58 est de préférence une plaque dont le bord inférieur est rectiligne et dont le profil est tel qu' elle recouvre partiellement, puis complètement les trous 48 de la rangée extérieure au fur et à mesure de l'accroissement de la largeur du canal de dépression 26.

Le distributeur ainsi constitué permet d'assurer avec précision, en utilisant une faible dépression, des semis dont la densité n'est pas très forte. En effet lorsque, des graines 60 ayant été placées dans le réceptacle central 6, l'arbre 16 est entraîné en rotation, par exemple par l'intermédiaire d'un pignon de chaine 62, des graines pénètrent dans les alvéoles 47 situées à la partie inférieure du carter, au-delà de la paroi 52, et sont entraînées par la dépression régnant dans le canal 26 et tout particulièrement dans la branche ascendante 28. Par suite, des graines sont appliquées, généralement par groupe de deux ou trois, contre chacun des trous 48 correspondant à cette branche ascendante et sont entraînées en direction de la partie large 27 du canal 26. A son entrée dans cette partie élargie chaque groupe de graines bute contre le déflecteur 58 qui le repousse en direction des orifices 50 de la rangée interne de telle sorte que seule l'une des graines reste et que les autres graines retombent dans le réceptacle central 6. Une graine est ainsi appliquée par la dépression contre chacun des trous 50 et entraînée par le disque distributeur 18 jusqu'au droit du bouchon 34. En ce point, l'action de la dépression est interrompue et une graine tombe par simple gravité dans l'alvéole 47 qui la contient où elle est retenue par l'ailette 46 et par le rebord 10 du couvercle jusqu' au moment ou elle parvient à l'ouverture 14 de décharge qui lui permet de tomber dans le sillon à ensemencer.

Pendant toute cette opération, la manette 40 a été maintenue dans la position représentée sur la Fig.2 où elle ferme totalement la prise d'air 38 de façon à assurer à l'intérieur du canal de dépression 26 une dépression maximale et à permettre la distribution de graines relativement lourdes, telles que des graines de maïs ou analogues, ou a été déplacé de façon à dégager une portion plus ou moins importante de cette prise d'air et ainsi à réduire l'importance de la dépression à l'intérieur du canal 26 pour faciliter la distribution des graines légères telles que des graines de betteraves.

Les graines légères étant souvent également des graines de faible dimension, il peut être avantageux de déplacer le déflecteur pour rapprocher plus rapidement le bord rectiligne 64 du déflecteur des trous 50 lorsque l'on ouvre la prise d'air 38. On utilise donc de préférence, dans ce cas, comme déflecteur, une plaque 66 qui est fixée d'une part sur l'axe fixe 57, et d'autre part sur un axe mobile 67 excentré sur l'axe 42 de pivotement de la manette 40 comme le montre les Fig.4 et 5. De cette manière un pivotement de l'extrémité de la manette 40, vers la gauche en regardant la Fig.5, provoque simultanément un accroissement de l'ouverture de la prise d'air 38 et un abaissement de l'extrémité supérieure de la plaque 66 de sorte que celle-ci se rapproche des trous 50 qu'elle peut même fermer partiellement. Bien entendu, un pivotement de la manette 40 en sens inverse, pour fermer la prise d'air, soulève au contraire l'extrémité supérieure de la plaquette 60 et permet à des graines de plus grande dimension d'être retenues de manière efficace par une dépression plus forte s'exerçant à travers les trous 50.

Le distributeur peut donc, par le simple réglage de la position de la manette 40, être adapté à différents types de graines et assurer leur mise en terre une à une de manière extrêmement fiable et régulière.

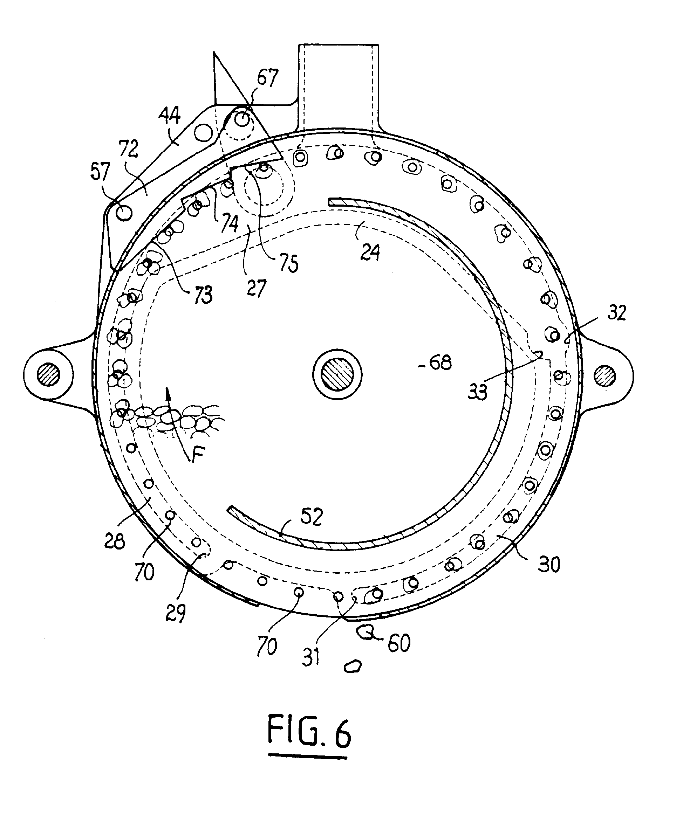

Ce distributeur peut également comporter à la place du disque distributeur 18 un disque distributeur 68 dépourvu d'ailette (Fig.6) et ne comportant qu'une seule rangée circonférentielle de trous 70. Dans ce cas les trous 70 sont ménagés de façon à correspondre au canal de dépression 26 et tout particulièrement au volume interne des branches étroites 28 et 30. En outre, le bouchon 34 est retiré de sorte que la totalité du canal 26 est soumis à la dépression et que seul les trous 70 se trouvant dans l'espace laissé libre entre les extrémités 29 et 31 des branches étroites 28 et 30 ne sont pas soumis à cette même dépression.

A l'entrée de la partie évasée 27 du canal de dépression 26 le bossage 44 porte en qualité de déflecteur une plaque 72 dont le bord inférieur est cranté et forme par suite une succession de rampes 73, 74, 75, inclinées par rapport à la circonférence formée par les trous 70. La plaque 72 est de préférence montée sur l'axe fixe 57 et sur l'axe mobile 67 de sorte qu'elle peut être déplacée par rapport à la rangée de trous 70 en fonction de la position de la manette 40 c'est-à-dire de l'ouverture de la prise d'air 38. Ainsi, comme dans le mode de réalisation précédent, la position de la plaque 72 peut varier en même temps que l'importance de la dépression existant dans le canal 26.

Cette dépression doit cependant toujours être importante et elle doit exister dans toute l'étendue du canal 26. En effet lors de la rotation du disque 68, les graines 60 sont prélevées dans le réceptacle 6 par l'effet d'aspiration s'exerçant à travers les trous 70 en regard de la branche étroite 28. Elles s'agglutinent en général par groupe de deux ou trois contre chacun de ces trous et sont entraînées par ces derniers en direction de la plaque 72 ou plus exactement des rampes 73, 74 et 75. En butant successivement contre ces rampes, le groupe de graines est déplacé et seule l'une de ces dernières reste appliquée contre le trou 70, les autres retombant dans le réceptacle central. La graine 60 restée contre le trou 70 est déplacée tout le long du canal de dépression 26 jusqu'à l'extrémité 31 de la branche étroite 30 c'est-à-dire pratiquement jusqu'au moment où elle se trouve en regard de l'ouverture de décharge 14. Elle tombe alors sur le sol.

Comme dans le mode de réalisation précédent, l'importance de la dépression de même que la position de l'organe déflecteur, ou plaque de sélection, peuvent être réglées de manière extrêmement simple en fonction de la nature des graines. Par ailleurs, le distributeur peut facilement être adapté aux différents types de semis puisque le remplacement du disque 18 par le disque 68, ou inversement, nécessite simplement l'ouverture du couvercle 4 pour permettre de faire glisser le premier disque hors de l'axe 16, de retirer ou de remettre le bouchon 34, puis d'enfiler le nouveau disque sur l'axe 16 avant de remettre en place le couvercle 4. De telles manoeuvres peuvent facilement être exécutées par un cultivateur de sorte qu'il suffit à celui-ci de posséder un semoir et plusieurs disques distributeurs pour pouvoir effectuer de manière efficace toute sorte de semis en étant assuré de pouvoir utiliser la dépression et la cadence de semence les plus appropriées.

Il est bien évident que le distributeur peut également comporter un disque muni d'ailettes et percé d'une seule rangée de trous pour un semis de graines lourdes, de faible densité. Un tel disque est de préférence utilisé avec l'organe obturateur 34 en place afin de limiter la demande de dépression.

De même le disque distributeur pourrait comporter plus de deux rangées de trous.

## Claims

1. Distributor for a monoseed sowing machine comprising a generally cylindrical case in which is rotatably mounted, on a horizontal shaft, a distributor disk (18, 68) which is provided with circumferentially spaced-apart openings and which separates a seed container (6) from a suction device provided with an element (38) for regulating the suction so that the openings are subjected to a low pressure which retains the seeds taken from the container during at least part of their angular travel; means for eliminating double seeds constituted by a deflecting device (66, 72) and, in the lower part of the case, a seed discharge opening, the suction device comprising, inside the case, a low pressure passageway (26) which is approximately crescent-shaped the ends of which are extended towards each other along the periphery of the case (1) by two narrow branches (28 and 30), **characterized in that** the suction device comprises at the beginning of one of its branches (30) a cavity (32, 33) for housing a closure element (34) capable of isolating this branch from the source of low pressure and a closure element (34) housed in said cavity (32, 33).

2. Distributor according to claim 1, **characterized in that** the bottom (36) of the low pressure passageway (26) is provided with an air intake (38) the opening of which is adjustable and constitutes an element for regulating the suction.

3. Distributor according to claim 1 or 2, **characterized in that** it comprises a distributor disk (68) pierced with a single row of circumferentially spaced-apart holes (70) which put the low pressure passageway (26, 28, 30) in communication with the seed container (6) over the entire length of said passageway.

4. Distributor according to any one of claims 1 to 3, **characterized in that** it comprises a disk (18) pierced by at least one row of circumferentially spaced-apart holes (48, 50) and fins (46) which define a succession of cells (47) each containing a hole (48, 50) of each row, the holes (48) of the radially outer row being opposite the narrow branches (28 and 30) of the low pressure passageway and the descending branch (30) being isolated from the source of low pressure by the closure element (34).

5. Distributor according to claim 3 or 4, **characterized in that** the deflector element (72) has a stepped lower edge forming several successive ramps (73, 74, 75) for eliminating double seeds.

6. Distributor according to claim 4, **characterized in that** the deflector element (58, 66) has a rectilinear inner surface.

7. Distributor according to claim 1, **characterized in that** the cavity for housing the closure element (34) is formed by a widening of the low pressure passageway (26) in the upper part part of the descending branch (30) relative to the direction of the rotation of the distributor disk (18, 68), and **in that** the closure element (34) is removable.

8. Distributor according to claim 1, **characterized in that** the widest part (27) of the low pressure passageway is located in the upper part of the case in the vicinity of a suction duct (2), the two narrow branches (28 and 30) extending towards the lower part of the case and terminating on each side of the seed discharge opening (14).

## Revendications

1. Distributeur pour semoir monograine, comportant un carter de forme générale cylindrique à l'intérieur duquel est monté rotatif, sur un axe horizontal, un disque distributeur (18,68) qui est muni d'orifices espacés circonférentiellement et qui sépare un réceptacle à graines (6) d'un dispositif d'aspiration muni d'un élément (38) de réglage de l'aspiration de telle sorte que les orifices sont soumis à une dépression de retenue des graines prélevées dans le réceptacle pendant au moins une partie de leur déplacement angulaire ; des moyens d'élimination des graines doubles constitués par un organe déflecteur (66,72) et, à la partie inférieure du carter, une ouverture de décharge des graines, le dispositif d'aspiration comportant, à l'intérieur du carter, un canal de dépression (26) ayant sensiblement la forme d'un croissant dont les extrémités sont prolongées en direction l'une de l'autre, le long de la périphérie du carter (1), par deux branches étroites (28 et 30), **caractérisé en ce que** le dispositif d'aspiration comporte au départ de l'une de ses branches (30) une cavité (32,33) de logement d'un organe d'obturation (34) susceptible d'isoler cette branche de la source de dépression et un organe d'obturation (34) logé dans ladite cavité (32,33).

2. Distributeur suivant la revendications 1, **caractérisé en ce que** le fond (36) du canal de dépression (26) est muni d'une prise d'air (38) dont l'ouverture est réglable et constitue un élément de réglage de l'aspiration.

3. Distributeur suivant la revendication 1 ou 2, **caractérisé en ce qu'**il comporte un disque distributeur (68) percé d'une seule rangée de trous (70) circonférentiellement espacés qui mettent en communication le canal de dépression (26,28,30) sur toute sa longueur avec le réceptacle à graines (6).

4. Distributeur suivant l'une quelconque des revendications 1 à 3, **caractérisé en ce qu'**il comporte un disque (18) percé d'au moins une rangée de trous espacés circonférentiellement (48,50), et des ailettes (46) qui délimitent une succession d'alvéoles (47) contenant chacun un trou (48,50) de chaque rangée, les trous (48) de la rangée radialement extérieure étant en regard des branches étroites (28 et 30) du canal de dépression, et la branche descendante (30) étant isolée de la source de dépression par l'organe d'obturation (34).

5. Distributeur suivant la revendication 3 ou 4, **caractérisé en ce que** l'organe déflecteur (72) a un bord inférieur cranté formant plusieurs rampes successives (73,74,75) d'élimination des graines doubles.

6. Distributeur suivant la revendication 4, **caractérisé en ce que** l'organe déflecteur (58,66) a une face intérieure rectiligne.

7. Distributeur suivant la revendication 1, **caractérisé en ce que** la cavité de logement de l'organe d'obturation (34) est formée par un élargissament du canal de dépression (26) à la partie supérieure de la branche descendante (30), en considérant le sens de rotation du disque distributeur (18,68), et **en ce que** l'organe d'obturation (34) est amovible.

8. Distributeur suivant la revendication 1, **caractérisé en ce que** la partie la plus large (27) du canal de dépression se trouve à la partie supérieure du carte, au voisinage d'une cheminée d'aspiration (2), les deux branches étroites (28 et 30) se dirigeant vers la partie inférieure du carter et se terminant de part et d'autre de l'ouverture de décharge de graines (14).

## Patentansprüche

1. Verteilervorrichtung an einer Einzelkorn-Sämaschine, die ein Gehäuse in allgemeiner zylindrischer Form aufweist, in dessem Inneren eine Verteilerscheibe (18, 68) drehbar auf einer horizontalen Achse angebracht ist, die mit Öffnungen, die mit Zwischenräumen auf dem Umfang angeordnet sind, ausgestattet ist, und die einen Kornauffang (6) von einer Ansaugvorrichtung trennt, die mit einem Ansaug-Steuerungsteil (38) ausgestattet ist, derart daß die Öffnungen einem Rückhalteunterdruck der aus dem Auffang entnommenen Körner während zumindest einem Teil ihrer Winkelverschiebung unterliegen; Aussonderungsmittel der Doppelkörner, die von einem Ablenkorgan (66, 72) und im unteren Teil des Gehäuses von einer Ablaßöffnung der Körner gebildet werden, wobei die Ansaugvorrichtung im Inneren des Gehäuses einen Unterdruckkanal (26) aufweist, der praktisch die Form eines Halbmondes hat, dessen Enden entlang dem Umfang des Gehäuses (1) durch zwei schmale Arme (28 und 30) zueinander hin verlängert sind, **dadurch gekennzeichnet, daß** die Ansaugvorrichtung am Anfang eines ihrer Arme (30) eine Vertiefung (32,33) zur Lagerung eines Verschlußorgans (34), das dazu geeignet ist, diesen Arm von der Unterdruckquelle zu isolieren, und ein Verschlußorgan (34), das in der Vertiefung (32,33) gelagert ist, aufweist.

2. Verteilervorrichtung gemäß Anspruch 1, **dadurch gekennzeichnet, daß** der Boden (36) des Unterdruckkanals (26) mit einem Luftloch (38) ausgestattet ist, dessen Öffnung steuerbar ist und ein Steuerungselement der Ansaugung bildet.

3. Verteilervorrichtung gemäß Anspruch 1 oder 2, **dadurch gekennzeichnet, daß** sie eine Verteilerscheibe (68) aufweist, die von einer einzigen Reihe Löcher, die auf dem Umfang mit Zwischenräumen angeordnet sind, durchbohrt ist, die den Unterdruckkanal (26, 28, 30) auf seiner gesamten Länge mit dem Körnerauffang (6) verbinden.

4. Verteilervorrichtung gemäß Anspruch 1 bis 3, **dadurch gekennzeichnet, daß** sie eine Scheibe (18) aufweist, die zumindest von einer Reihe Löcher (48, 50), die auf dem Umfang mit Zwischenräumen angeordnet sind, und Flügeln (46) durchbohrt ist, die eine Folge von Zellen (47), die jede ein Loch (48, 50) jeder Reihe enthalten, begrenzen, wobei die Löcher (48) der radial äußeren Reihe den schmalen Armen (28 und 30) des Unterdruckkanals gegenüberstehen, und der absteigende Arm (30) von der Unterdruckquelle durch das Verschlußorgan (34) isoliert ist.

5. Verteilervorrichtung gemäß Anspruch 3 oder 4, **dadurch gekennzeichnet, daß** das Ablenkorgan (72) ein unteres gerastetes Bord hat, das mehrere aufeinanderfolgende Aussonderungsrampen (73, 74, 75) der Doppelkörner bildet.

6. Verteilervorrichtung gemäß Anspruch 4, **dadurch gekennzeichnet, daß** das Ablenkorgan (58, 66) eine gerade Innenfläche hat.

7. Verteilervorrichtung gemäß Anspruch 1, **dadurch gekennzeichnet, daß** die Vertiefung zur Lagerung des Verschlußorgans (34) durch eine Erweiterung des Unterdruckkanals (26) am oberen Teil des absteigenden Armes (30) gebildet wird, unter Beachtung des Drehsinns der Verteilerscheibe (18, 68), und **dadurch**, daß das Verschlußorgan abnehmbar ist.

8. Verteilervorrichtung gemäß Anspruch 1, **dadurch gekennzeichnet, daß** sich der weiteste Teil (27) des Unterdruckkanals im oberen Teil des Gehäuses in Nachbarschaft eines Ansaugschachtes (2) befindet, wobei sich die beiden schmalen Arme (28 und 30) zum unteren Teil des Gehäuses hin ausrichten und beidseits der Ablaßöffnung der Körner (14) enden.
